# DEMANDE DE BREVET EUROPEEN

(11) **EP 4 741 698 A1**
(43) Date de publication de la demande: **13.05.2026**
(21) Numéro de dépôt: 25213695.7
(22) Date de dépôt: 05.11.2025
(51) Int. Cl.: F16L 55/128, F16L 55/115

(54) **BOUCHON POUR ÉLÉMENT DE CANALISATION, COMPRENANT UN DISQUE ET UN SYSTÈME DE FIXATION DU DISQUE, ENSEMBLE ET PROCÉDÉ CORRESPONDANTS**

(30) Priorité: 07.11.2024 FR 2412200
(71) Demandeur: Saint-Gobain Pam Canalisation, 54700 Pont-à-Mousson (FR)
(72) Inventeur: GRASSER, Johan, 57950 MONTIGNY-LÈS-METZ (FR); ROTHARMEL, Vincent, 54121 VANDIERES (FR)
(74) Mandataire: Lavoix

(57) **Abrégé**

Bouchon (14) pour obturer un bout (16) d'un élément de canalisation (12), comprenant :
- un disque (22) définissant un axe central (X), et mobile par rapport à l'élément de canalisation entre une position d'obturation et une position de repos,
- un système de fixation (24) monté sur le disque et comprenant un premier sous-système (24A) comportant une première extrémité (36) radialement par rapport à l'axe central, et un deuxième sous-système (24B) définissant une ou plusieurs surface(s) (38).
Le système de fixation est mobile entre une configuration déployée, dans laquelle la première extrémité est plaquée et exerce une pression (F1) sur une surface radialement intérieure (30) du bout et la ou les surface(s) sont plaquée(s) et exercent une contre-pression (F2) sur la surface radialement intérieure pour fixer le disque dans la position d'obturation par frottements ou butée, et une configuration rétractée, dans laquelle au moins la première extrémité est plus proche de l'axe central que dans la configuration déployée.

## Description

### DOMAINE

La présente invention concerne le domaine des canalisations, plus particulièrement un bouchon pour obturer un bout d'un élément de canalisation, tel qu'un tuyau.

L'invention concerne également un ensemble comprenant un tel bouchon et le l'élément de canalisation, ainsi qu'un procédé d'obturation correspondant.

### ART ANTERIEUR

Il est connu de placer des bouchons de protection, par exemple sur le bout uni ou le bout à emboîtement d'un tuyau adapté pour former une partie de canalisation. Une telle canalisation sert par exemple à transporter de l'eau.

Actuellement, des bouchons en matière plastique sont utilisés. Toutefois, de tels bouchons ne peuvent être réparés, ni s'adapter à différentes classes de tenue à la pression pour un diamètre nominal (DN) de tuyau donné. En effet, la classe de pression modifie l'épaisseur de l'élément de canalisation pour un même diamètre externe et modifie donc son diamètre intérieur.

En outre, les bouchons en matière plastique nécessitent la création d'outillages de moulage pour leur fabrication. De tels outillages sont complexes et onéreux notamment à partir d'un certain diamètre de bouchon.

Un but de l'invention est de remédier à tout ou partie des inconvénients ci-dessus, en fournissant un bouchon plus simple à fabriquer et à utiliser.

### RESUME DE L'INVENTION

L'invention a pour objet un bouchon selon la revendication 1.

Suivant d'autres aspects avantageux de l'invention, le bouchon comprend une ou plusieurs des caractéristiques correspondant aux revendications 2 à 8, prise(s) isolément ou suivant toutes les combinaisons techniquement possibles.

L'invention a aussi pour objet un ensemble selon la revendication 9.

L'invention a aussi pour objet un procédé selon la revendication 10.

### BREVE DESCRIPTION DES DESSINS

L'invention apparaîtra plus clairement à la lecture de la description qui va suivre, donnée uniquement à titre d'exemple non limitatif, et faite en référence aux dessins annexés, dans lesquels :
- la figure 1 est une vue schématique en perspective d'un ensemble selon un premier mode de réalisation de l'invention, montrant une face externe du disque, le bouchon étant dans la position d'obturation,
- la figure 2 est une vue schématique en perspective du bouchon représenté sur la figure 1, montrant une face interne du disque et le système de fixation,
- la figure 3 est une vue schématique de l'ensemble représenté sur la figure 1, en coupe selon un plan passant par l'axe central,
- la figure 4 est une vue schématique d'un ensemble selon un deuxième mode de réalisation de l'invention, en coupe selon un plan passant par l'axe central, et
- la figure 5 est une vue schématique en perspective du bouchon représenté sur la figure 4, montrant la face interne du disque et le système de fixation.

### DESCRIPTION DETAILLEE

### Ensemble selon le premier mode de réalisation

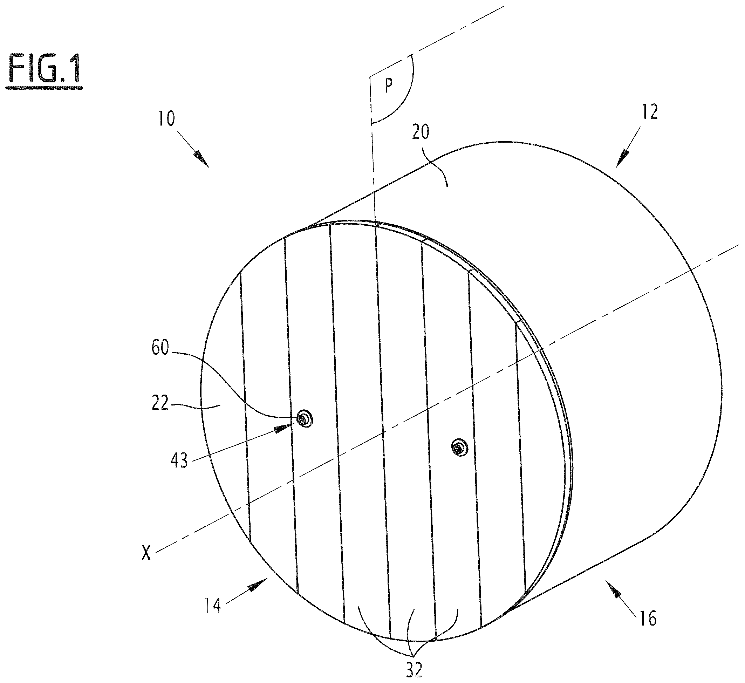

En référence aux figures 1 à 3, on décrit un ensemble 10 selon un premier mode de réalisation de l'invention.

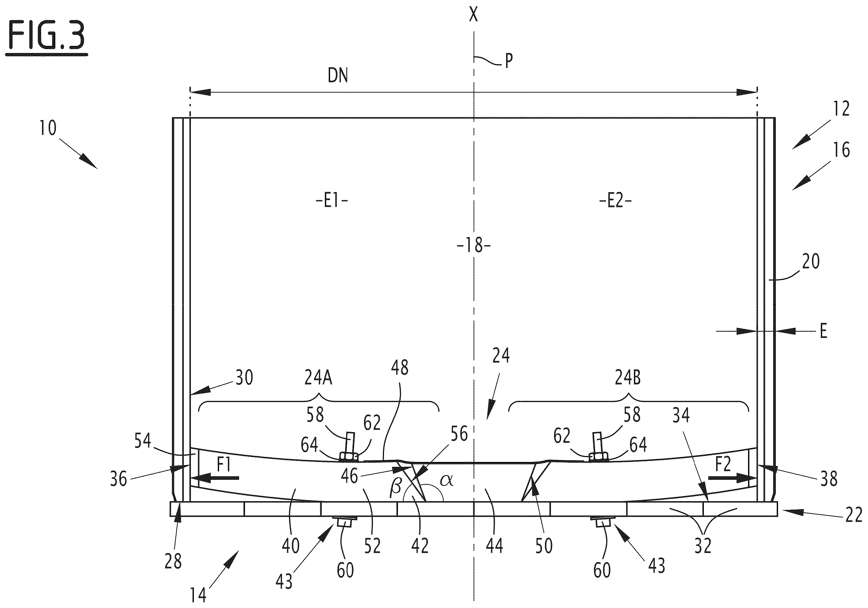

L'ensemble 10 comprend un élément de canalisation 12 (figures 1 et 3), par exemple un tuyau, et un bouchon 14 (figures 1 à 3).

L'élément de canalisation 12 est par exemple destiné à faire partie d'une canalisation (non représentée) de transport d'eau potable ou d'eaux usées.

L'élément de canalisation 12 est par exemple en fonte.

L'élément de canalisation 12 présente avantageusement un diamètre nominal (DN), correspondant à son diamètre intérieur, compris entre 60 mm et 2000 mm.

L'élément de canalisation 12 comporte un bout 16, par exemple uni ou à emboîtement, que le bouchon 14 est adapté pour obturer. Cette obturation est destinée à protéger l'élément de canalisation 12 avant son installation, notamment lorsque l'élément de canalisation est stocké ou transporté. Par « obturation », on entend le fait d'empêcher, ou de limiter, l'introduction d'eaux stagnantes, de salissures, de pollutions ou d'autres corps étrangers (non représentés) à l'intérieur de l'élément de canalisation 12, dans un volume interne 18 défini par l'élément de canalisation 12 et le bouchon 14.

Selon sa classe de tenue à la pression, l'élément de canalisation 12 présente une paroi 20 d'épaisseur E (figure 3) différente, à laquelle le bouchon 14 est avantageusement capable de s'adapter, comme on le verra plus bas.

Le bouchon 14 comprend un disque 22 définissant un axe central X perpendiculaire au disque, et un système de fixation 24 monté sur le disque.

L'axe X est aussi sensiblement l'axe central de l'élément de canalisation 12 lorsque le bouchon 14 obture le bout 16.

Dans l'exemple, le bouchon 14 comprend aussi des pièces d'assemblage 26 pour assembler le disque.

### Disque

Le disque 22 est destiné à être mobile par rapport à l'élément de canalisation 12 entre une position d'obturation (figures 1 et 3), dans laquelle le disque obture le bout 16 de l'élément de canalisation, et une position de repos, dans laquelle le disque 22 est à l'écart de l'élément de canalisation 12. La position de repos n'est pas représentée, mais se déduit facilement des figures 1 et 3 en déplaçant le disque 22 à l'écart de l'élément de canalisation 12, par exemple selon l'axe central X.

Le disque 22 est avantageusement de forme circulaire autour de l'axe central X. Le disque 22 est par exemple adapté pour buter axialement contre un bord 28 du bout 16 dans la position d'obturation.

Avantageusement, le disque 22 présente un diamètre D sensiblement compris entre 60 mm et 2300 mm.

Le disque 22 est avantageusement réalisé en bois, par exemple en bois résineux. Le bois présente l'avantage de pouvoir s'affranchir d'outillages de fabrication, contrairement par exemple à des bouchons en plastique.

Le disque 22 est par exemple constitué de plusieurs lattes 32 ou planches parallèles les unes aux autres et jointives.

Les lattes 32 ou planches sont maintenues par les pièces d'assemblage 26.

Dans l'exemple, il y a deux pièces d'assemblage 26, avantageusement en bois, fixées sur les lattes 32, sur une face interne 34 du disque 22. Les pièces d'assemblage 26 s'étendent par exemple perpendiculairement aux lattes 32. Il peut y avoir plus de deux pièces d'assemblage 26, notamment pour les éléments de canalisation ayant un DN de 1200 mm ou plus.

Les deux pièces d'assemblage 26 sont avantageusement espacées l'une de l'autre, par exemple d'une distance DL supérieure à un quart du diamètre D du disque.

Selon des variantes non représentées, le disque 22 et/ou les pièces d'assemblage 26 sont réalisés dans d'autres matériaux que du bois. Pour certains de ces matériaux, le disque 22 peut être d'un seul tenant et le bouchon 14 ne comporte pas les pièces d'assemblage 26.

### Système de fixation

Le système de fixation 24 comprend un premier sous-système 24A comportant une première extrémité 36 radialement par rapport à l'axe central X, la première extrémité se situant dans un premier demi-espace E1 situé d'un côté par rapport à un plan P passant par l'axe central X. Le système de fixation 24 comprend un deuxième sous-système 24B définissant une ou plusieurs surface(s) 38 situées dans un deuxième demi-espace E2 situé de l'autre côté du plan P par rapport au premier demi-espace E1.

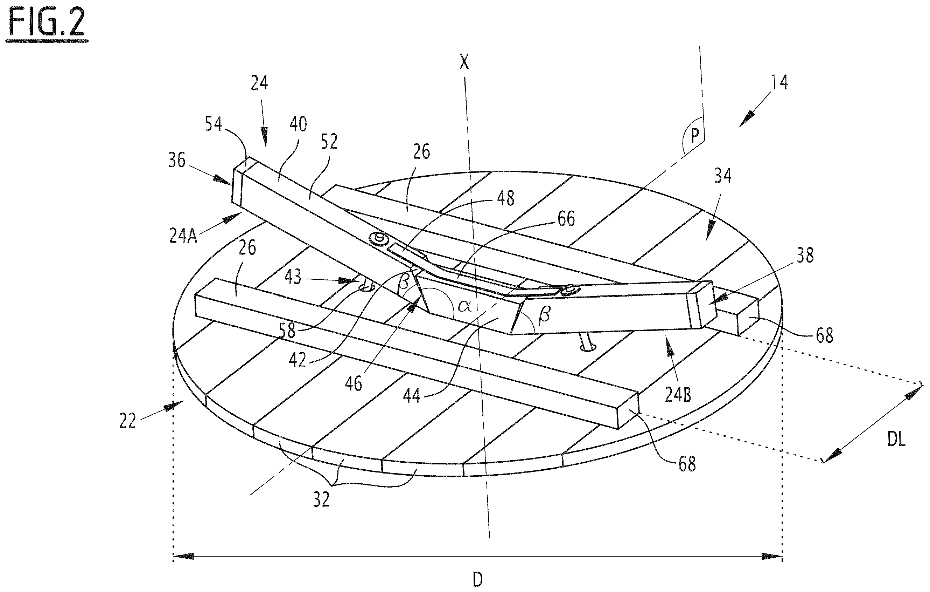

Le système de fixation 24 est mobile entre une configuration déployée (figure 3) et une configuration rétractée (figure 2).

Dans la configuration déployée, la première extrémité 36 est adaptée, lorsque le disque 22 est dans la position d'obturation, à être plaquée et à exercer une pression F1 sur une surface radialement intérieure 30 du bout 16. La ou les surfaces 38 sont adaptées pour être plaquée(s) et exercer ensemble une contre-pression F2 sur la surface radialement intérieure 30, la pression et la contre-pression étant adaptées pour fixer le disque 22 dans la position d'obturation par frottements de la première extrémité 36 et de la ou des surface(s) 38 sur la surface radialement intérieure 30.

Dans la configuration rétractée, au moins la première extrémité 36 est plus proche de l'axe central X que dans la configuration déployée.

Avantageusement, si la surface radialement intérieure 30 n'est pas cylindrique (par exemple dans le cas d'un bout à emboîtement), le dispositif de fixation 24 est adapté pour que la première extrémité 36 et la ou les surfaces 38 présentent une inclinaison (non représentée) par rapport à l'axe central X dans la configuration déployée, de façon à venir en butée contre une portion de la surface radialement intérieure 30.

Le premier sous-système 24A comprend un bras 40, qui définit la première extrémité 36 et une deuxième extrémité 42 opposée radialement à la première extrémité 36. Le premier sous-système 24A est adapté pour maintenir la deuxième extrémité 42 en contact avec le disque 22, ou avec une pièce du bouchon 14 fixée sur le disque 22, dans l'exemple avec une cale 44.

Le premier sous-système 24A comprend avantageusement un dispositif de réglage 43 pour contribuer à faire passer le système de fixation 24 de la configuration rétractée à la configuration déployée et inversement.

Dans l'exemple, la cale 44 est fixée sur la face interne 34 du disque 22, et possède une surface inclinée 46 définissant un angle α obtus avec ladite face interne 34 du côté de la cale 44.

Le premier sous-système 24A comprend par exemple un organe de maintien 48.

Dans l'exemple, la première extrémité 36 est plus proche axialement du disque 22 dans la configuration déployée que dans la configuration rétractée.

La cale 44 est par exemple commune au premier sous-système 24A et au deuxième sous-système 24B, en formant deux surfaces inclinées 46, 50.

Le bras 40 comporte une tige 52, de préférence en bois. Avantageusement, le bras 40 comporte un patin 54 formant la première extrémité 36.

La tige 52 a par exemple une section rectangulaire perpendiculairement à la longueur de la tige.

A l'opposé du patin 54, la tige 52 définit une surface inclinée 56 formant un angle β aigu avec ladite face interne 34 du côté de la tige 52. La surface inclinée 56 est adaptée pour coopérer avec la surface inclinée 46 de la cale 44 pour maintenir la deuxième extrémité 42 en contact avec le disque 22.

Le dispositif de réglage 43 comporte au moins une vis de réglage 58, la vis de réglage comportant une tête 60 située axialement du côté du disque 22 opposé au bras 40, la vis de réglage 58 étant adaptée pour agir sur le bras 40, par vissage ou dévissage, pour contribuer à faire passer le système de fixation 24 de la configuration rétractée à la configuration déployée.

Avantageusement, le dispositif de réglage 43 comprend un écrou 62 et une rondelle crantée 64 du côté opposé à la tête 60 par rapport au bras 40, afin que la vis de réglage 58 vienne se serrer dans l'écrou 62 et non dans le bois de la tige 52, évitant ainsi un risque de délocalisation de la vis de réglage 58.

La vis de réglage 58 est avantageusement située à l'écart de l'axe central X.

La vis de réglage 58 est par exemple inclinée par rapport à l'axe central X.

La vis de réglage 58 n'est pas directement reliée à la deuxième extrémité 42 du bras. La vis de réglage 58 est avantageusement adaptée pour agir directement sur une partie centrale du bras 40 s'étendant entre la première extrémité 36 et la deuxième extrémité 42 du bras, de manière à obtenir un effet de levier. La vis de réglage 58 traverse par exemple cette partie centrale.

La deuxième extrémité 42 est par exemple une extrémité « simple », c'est-à-dire venue de matière avec la partie centrale du bras 40. La deuxième extrémité 42 est avantageusement un simple bout de la tige 52.

Avantageusement, la deuxième extrémité 42 ne comporte pas d'écrou ou de vis de réglage, et n'est pas reliée directement à un écrou ou à une vis de réglage. Avantageusement, la deuxième extrémité 42 n'est pas destinée à se déplacer axialement lorsque le système de fixation 24 passe de la configuration rétractée à la configuration déployée.

Le patin 54 est avantageusement adapté pour éviter un glissement de la première extrémité 36 sur la surface radialement intérieure 30. Le patin 54 est par exemple en matériau élastomère ou en liège.

Avantageusement, le patin 54 permet de compenser les éventuelles variations dues au fait que le bois est susceptible de travailler (se rétrécir).

L'organe de maintien 48 est avantageusement adapté pour tenir le bras 40 si la vis de réglage 58 est enlevée. L'organe de maintien 48 est adapté pour maintenir le système de fixation 24 sensiblement dans la configuration rétractée.

L'organe de maintien 48 comprend par exemple un feuillard métallique 66 fixé sur le bras 40 et sur la cale 44, ou en variante (non représentée) directement sur le disque 22.

Dans l'exemple, le deuxième sous-système 24B est structurellement analogue au premier sous-système 24A et est sensiblement diamétralement opposé au premier sous-système 24A par rapport à l'axe central X. Le premier sous-système 24A et le deuxième sous-système 24B sont par exemple symétriques l'un de l'autre par rapport au plan P. Aussi, le deuxième sous-système 24B ne sera pas décrit en détail.

Dans l'exemple, le deuxième sous-système 24B définit une seule surface d'appui 38, qui est l'analogue de la première extrémité 36 du premier sous-système 24A.

Selon des variantes non représentées, le deuxième sous-système 24B n'est pas structurellement analogue au premier sous-système 24A. Par exemple, dans le deuxième sous-système 24B, la ou les surfaces 38 appliquant la contre-pression F2 peuvent être une ou des butées fixes par rapport au disque 22.

Selon une variante particulière (non représentée), une ou plusieurs extrémités 68 des pièces d'assemblage 26 forment la ou les butées fixes. Dit autrement, la ou les extrémités 68 sont adaptées pour buter sur la surface radialement intérieure 30 du bout 16.

### Fonctionnement

Le fonctionnement de l'ensemble 10 découle de sa structure et va maintenant être brièvement décrit pour illustrer un procédé selon l'invention.

Le disque 22 est initialement dans la position de repos.

Pour obturer le bout 16, le disque 22 est déplacé par rapport à l'élément de canalisation 12 entre la position de repos et la position d'obturation.

Lorsque le disque 22 est dans la position d'obturation, le système de fixation 24 est mis dans la configuration déployée. Dans l'exemple, le système de fixation 24 est déplacé manuellement de la configuration rétractée à la configuration déployée, en agissant sur le dispositif de réglage 43 de chacun du premier sous-système 24A et du deuxième sous-système 24B. Plus précisément, on visse ou on dévisse la vis de réglage 58 à l'aide d'un tournevis (non représenté) appliqué sur la tête 60. Ceci est réalisé pour le deuxième sous-système 24B également.

Dans les variantes où le deuxième sous-système 24B est à butée(s) fixe(s), seule la vis de réglage 58 du premier sous-système 24A est actionnée.

Ainsi, la première extrémité 36 est plaquée et exerce la pression F1 sur la surface radialement intérieure 30 du bout 16. La tige 52 est arc-boutée entre la surface radialement intérieure 30 et la cale 44.

Dans l'exemple, la surface 38 est plaquée et exerce la contre-pression F2 sur la surface radialement intérieure 30. La pression F1 et la contre-pression F2 fixent le disque 22 dans la position d'obturation par frottements ou butée de la première extrémité 36 et de la surface 38 sur la surface radialement intérieure 30.

Le système de fixation 24, notamment lorsqu'il est en configuration rétractée, permet de déplacer le disque 22 de la position de repos à la position d'obturation, et inversement de la position d'obturation à la position de repos.

### Ensemble selon le deuxième mode de réalisation

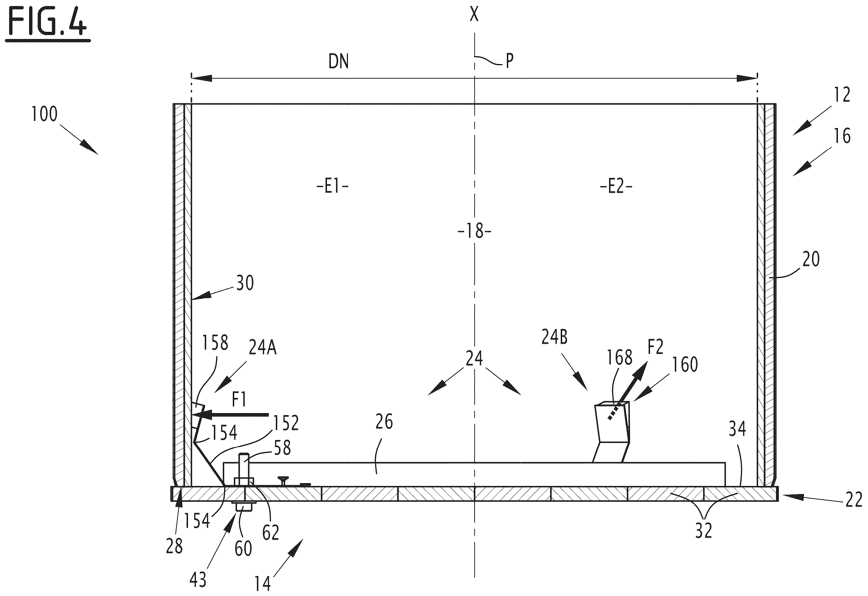

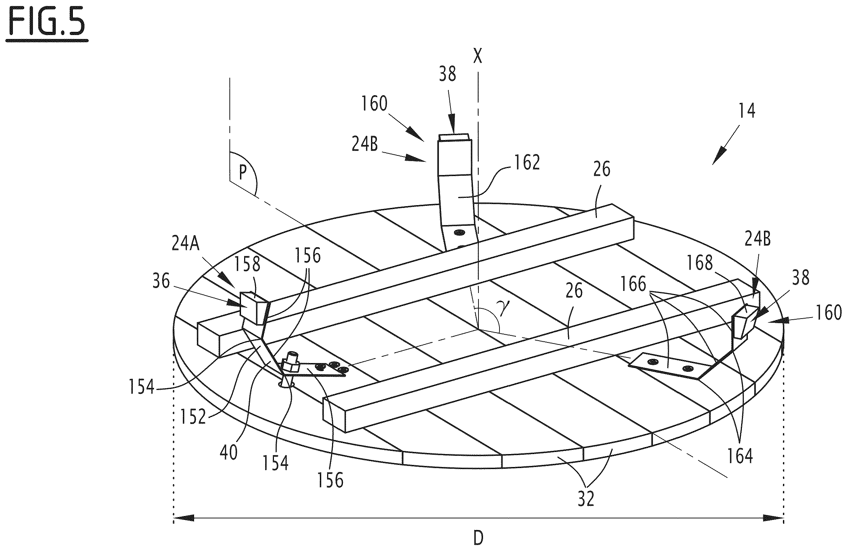

En référence aux figures 4 et 5, on décrit un ensemble 100 selon un deuxième mode de réalisation de l'invention. L'ensemble 100 est analogue à l'ensemble 10 représenté sur les figures 1 à 3. Les éléments similaires portent les mêmes références numériques et ne seront pas décrits à nouveau. Seules les différences seront décrites en détail ci-après.

Le premier sous-système 24A ne comprend pas l'organe de maintien 48, ni la cale 44 centrale.

Le bras 40 ne comporte pas la tige 52, mais une languette 152 métallique comportant au moins deux pliures 154 définissant une pluralité de segments 156, le premier sous-système 24A comprenant une cale 158 fixée sur l'un des segments et formant la première extrémité 36.

La languette 152 forme avantageusement une équerre.

Un autre des segments 156 est monté sur le disque 22 ou, selon une variante non représentée, sur une pièce du bouchon 14 fixée sur le disque 22.

Le dispositif de réglage 43 permet de déplacer le premier sous-système 24A par rapport au disque 22 entre la configuration rétractée et la configuration déployée.

Dans l'exemple, le deuxième sous-système 24B n'est pas structurellement analogue au premier sous-système 24A, ni sensiblement diamétralement opposé au premier sous-système par rapport à l'axe central X.

Le deuxième sous-système 24B comporte par exemple deux systèmes 160 structurellement analogues entre eux.

Le premier sous système 24A et les deux systèmes 160 définissent avantageusement entre eux autour de l'axe central X des angles γ (dont un seul est représenté sur la figure 5) compris entre 110° et 130°, par exemple d'environ 120°.

Chacun des deux systèmes 160 comprend par exemple une languette 162 métallique comportant au moins deux pliures 164 définissant une pluralité de segments 166, l'un des segments étant fixé sur le disque 22 ou sur une pièce du bouchon 14 fixée sur le disque. Chacun des deux systèmes 160 comprend par exemple une cale 168 définissant chacune une surface d'appui 38.

Éventuellement, les cales 158, 168 forment des patins (non représentés) analogues au patin 54, ou sont des patins.

Selon une variante non représentée, chacun des deux systèmes 160 est structurellement analogue au premier sous-système 24A, c'est-à-dire qu'ils comportent chacun un dispositif de réglage analogue au dispositif de réglage 43.

Selon une autre variante non représentée, le premier sous-système 24A et le deuxième sous-système 24B ne comportent pas de dispositif de réglage 43, et seule l'élasticité des languettes 152, 162 est utilisée pour passer de la configuration rétractée à la configuration déployée.

Selon un mode particulier (non représenté), la première extrémité 36 n'est pas plus proche axialement du disque 22 dans la configuration déployée que dans la configuration rétractée. Par exemple, la languette 152 est fixée sur un socle (non représenté) lui-même fixé sur le disque 22, et la languette 152 est configurée pour que la première extrémité 36 se déplace parallèlement au disque 22. La même configuration peut être appliquée aux deux systèmes 160. Dans ce cas, le passage de la configuration rétractée à la configuration déployée se fait, par exemple, par déformation élastique radiale des systèmes 160 ou grâce à un dispositif de réglage des systèmes 160 analogue au dispositif de réglage 43.

Le fonctionnement du bouchon 100 est analogue à celui du bouchon 10.

### Avantages

Grâce aux caractéristiques décrites ci-dessus, les bouchons 10, 100 sont plus simples à fabriquer et à utiliser.

En effet, le matériau du disque 22, en particulier le bois, est simple à obtenir et d'un coût inférieur à celui des disques en matière plastique passé un certain diamètre minimal.

Les bouchons 10, 100 décrits ci-dessus peuvent être réparés et facilement réutilisés.

En outre, le système de fixation 24 étant réglable et/ou présentant une élasticité radiale, le bouchon 14 peut s'adapter à des éléments de canalisation 12 ayant un même diamètre externe mais dont l'épaisseur E (et donc le diamètre intérieur) varie en fonction de la classe de pression de l'élément de canalisation.

De plus, le ou les patins 54 optionnels permettent aussi au système de fixation 24 de s'adapter à des variations dimensionnelles, notamment liées aux pièces en bois.

## Revendications

1. Bouchon (14) pour obturer un bout (16) d'un élément de canalisation (12), le bouchon (14) comprenant :
- un disque (22), comprenant de préférence du bois, et définissant un axe central (X) perpendiculaire au disque (22), et
- un système de fixation (24) monté sur le disque (22),
le disque (22) étant destiné à être mobile par rapport à l'élément de canalisation (12) entre une position d'obturation, dans laquelle le disque (22) obture le bout (16) de l'élément de canalisation (12), et une position de repos, dans laquelle le disque (22) est à l'écart de l'élément de canalisation (12),
le système de fixation (24) comprenant :
- un premier sous-système (24A) comportant une première extrémité (36) radialement par rapport à l'axe central (X), la première extrémité (36) se situant dans un premier demi-espace (E1) situé d'un côté par rapport à un plan (P) passant par l'axe central (X), et
- un deuxième sous-système (24B) définissant une ou plusieurs surface(s) (38) situées dans un deuxième demi-espace (E2) situé de l'autre côté du plan (P) par rapport au premier demi-espace (E1),
le système de fixation (24) étant mobile entre :
- une configuration déployée, dans laquelle la première extrémité (36) est destinée, lorsque le disque (22) est dans la position d'obturation, à être plaquée et à exercer une pression (F1) sur une surface radialement intérieure (30) du bout (16) et la ou les surface(s) (38) sont destinées à être plaquée(s) et à exercer une contre-pression (F2) sur la surface radialement intérieure (30), la pression (F1) et la contre-pression (F2) étant adaptées pour fixer le disque (22) dans la position d'obturation par frottements ou butée de la première extrémité (36) et de la ou des surface(s) (38) sur la surface radialement intérieure (30), et
- une configuration rétractée, dans laquelle au moins la première extrémité (36) est plus proche de l'axe central (X) que dans la configuration déployée,
dans lequel le premier sous-système (24A) comprend un bras (40) définissant la première extrémité (36) et une deuxième extrémité (42) opposée radialement à la première extrémité (36),
**caractérisé en ce que** le premier sous-système (24A) est adapté pour maintenir la deuxième extrémité (42) en contact avec le disque (22) ou une pièce du bouchon (14) fixée sur le disque (22), la première extrémité (36) étant plus proche axialement du disque (22) dans la configuration déployée que dans la configuration rétractée.

2. Bouchon (14) selon la revendication 1, dans lequel le premier sous-système (24A) comprend un dispositif de réglage (43) comportant au moins une vis de réglage (58), la vis de réglage (58) comportant une tête (60) située axialement du côté du disque (22) opposé au bras (40), la vis de réglage (58) étant adaptée pour agir sur le bras (40), par vissage ou dévissage, pour contribuer à faire passer le système de fixation (24) de la configuration rétractée à la configuration déployée.

3. Bouchon (14) selon la revendication 1 ou 2, dans lequel le bras (40) comporte une tige (52), de préférence en bois.

4. Bouchon (14) selon la revendication 3, dans lequel le premier sous-système (24A) comprend une cale (44) fixée sur le disque (22), la cale (44) comprenant une surface inclinée (46) définissant un angle (α) obtus avec le disque (22) du côté de la cale (44), la tige (52) définissant une surface inclinée (56) formant la deuxième extrémité (42) du bras (40), la surface inclinée (56) de la tige (52) formant un angle (β) aigu avec le disque (22) du côté de la tige (52), la surface inclinée (56) de la tige (52) étant adaptée pour coopérer avec la surface inclinée (46) de la cale (44) pour maintenir la deuxième extrémité (42) en contact avec le disque (22).

5. Bouchon (14) selon l'une quelconque des revendications 3 ou 4, dans lequel le deuxième sous-système (24B) est structurellement analogue au premier sous-système (24A) et sensiblement diamétralement opposé au premier sous-système (24A) par rapport à l'axe central (X).

6. Bouchon (14) selon la revendication 1 ou 2, dans lequel le bras (40) comporte une languette (152) métallique comportant au moins deux pliures (154) définissant une pluralité de segments (156), le premier sous-système (24A) comprenant une cale (158) fixée sur l'un des segments (156) et formant la première extrémité (36), un autre des segments (156) étant monté sur le disque (22) ou sur une pièce du bouchon (14) fixée sur le disque (22).

7. Bouchon (14) selon la revendication 6, dans lequel le deuxième sous-système (24B) comporte deux systèmes (160) structurellement analogues entre eux, le premier sous-système (24A) et les deux systèmes (160) définissant entre eux autour de l'axe central (X) des angles (γ) compris entre 110° et 130°.

8. Bouchon (14) selon la revendication 7, dans lequel chacun des deux systèmes (160) comprend une languette (162) métallique comportant au moins deux pliures (164) définissant une pluralité de segments (166), l'un des segments (166) étant fixé sur le disque (22) ou sur une pièce du bouchon (14) fixée sur le disque (22).

9. Ensemble (10 ; 100) comprenant :
- un élément de canalisation (12), et
- un bouchon (14) selon l'une quelconque des revendications 1 à 8,
le disque (22) étant mobile par rapport à l'élément de canalisation (12) entre la position d'obturation et la position de repos,
la première extrémité (36), dans la configuration déployée, étant adaptée, lorsque le disque (22) est dans la position d'obturation, pour être plaquée et exercer une pression (F1) sur la surface radialement intérieure (30) du bout (16) et la ou les surface(s) (38) étant adaptée(s) pour être plaquée(s) et exercer ensemble une contre-pression (F2) sur la surface radialement intérieure (30) pour fixer le disque dans la position d'obturation.

10. Procédé d'obturation d'un bout (16) d'un élément de canalisation (12), comprenant les étapes suivantes :
- obtention d'un élément de canalisation (12), et d'un bouchon (14) selon l'une quelconque des revendications 1 à 8,
- déplacement du disque (22) par rapport à l'élément de canalisation (12) entre la position de repos et la position d'obturation, et
- lorsque le disque (22) est dans la position d'obturation, mise du système de fixation (24) dans la configuration déployée, la première extrémité (36) étant plaquée et exerçant une pression (F1) sur une surface radialement intérieure (30) du bout (16) et la ou les surface(s) (38) étant plaquée(s) et exerçant ensemble une contre-pression (F2) sur la surface radialement intérieure (30), la pression (F1) et la contre-pression (F2) fixant le disque (22) dans la position d'obturation par frottements ou butée de la première extrémité (36) et de la ou des surface(s) (38) sur la surface radialement intérieure (30).
